# FASCICULE DE BREVET EUROPEEN

(11) **EP 1 119 585 B1**
(45) Date de publication et mention de la délivrance du brevet: **16.06.2004**
(21) Numéro de dépôt: 99970095.8
(22) Date de dépôt: 06.10.1999
(51) Int. Cl.: C08F 10/02, C08F 2/38, C08F 4/30, C08F 293/00, C08F 4/34, C08F 4/32

(54) **PROCEDE DE POLYMERISATION OU COPOLYMERISATION RADICALAIRE CONTROLEE DE L'ETHYLENE SOUS HAUTE PRESSION EN PRESENCE D'UN AMORCEUR-CONTROLEUR**
Verfahren zur kontrollierten radikalischen Hochdruck-(Co)Polymerisation von Ethylen in Gegenwart von einem Kontrollfunktionsinitiator
METHOD FOR CONTROLLED FREE RADICAL POLYMERISATION OR COPOLYMERISATION OF ETHYLENE UNDER HIGH PRESSURE IN THE PRESENCE OF AN INITIATOR-CONTROLLER

(30) Priorité: 06.10.1998 FR 9812477; 05.08.1999 FR 9910198
(43) Date de publication de la demande: 01.08.2001
(73) Titulaire: Atofina, 92800 Puteaux (FR)
(72) Inventeur: BUBACK, Michael, D-37120 Eddigehausen (DE); MINAUX, Eric, F-88000 Epinal (FR); SENNINGER, Thierry, F-57700 Hayange (FR); LE BLEVEC, Jean-Marc, F-64140 Billere (FR)
(74) Mandataire: Chaillot, Geneviève
(86) Numéro de dépôt international: PCT/FR1999/002318
(87) Numéro de publication internationale: WO 2000/020469

(56) Documents cités:
- EP-A- 0 135 280
- EP-A- 0 717 054
- EP-A- 0 807 640
- EP-A- 0 832 902
- EP-A- 0 844 256
- WO-A-99/03894

## Description

La présente invention porte sur un procédé de polymérisation ou copolymérisation radicalaire contrôlée de l'éthylène sous haute pression, en présence d'un amorceur-contrôleur.

La polymérisation sous haute pression de l'éthylène ou sa copolymérisation sous haute pression avec des comonomères copolymérisables par voie radicalaire conduit à une grande Variété de produits qui trouvent de nombreuses applications, parmi lesquelles on peut citer les bases pour adhésifs, en particulier hot-melts, les liants de bitumes, les films d'emballage, les liants de coextrusion, les objets moulés, etc.

On connaît depuis longtemps des procédés de polymérisation de l'éthylène à des températures et pressions élevées au moyen d'amorceurs de radicaux libres. Les polymères de l'éthylène s'obtiennent en homopolymérisant l'éthylène ou en le copolymérisant avec au moins un autre comonomère dans un système de polymérisation fonctionnant en continu, sous des pressions de l'ordre de 50 MPa à 500 MPa et à des températures comprises entre 50 et 300°C. La polymérisation est réalisée dans des réacteurs continus tubulaires ou des autoclaves à agitateur, en présence d'amorceurs et éventuellement d'agents de transfert. Les polymères sont ensuite séparés des substances volatiles après leur sortie du réacteur dans des séparateurs.

Il est connu que la polymérisation de l'éthylène en présence ou non de comonomères peut conduire à des emballements de réaction (voir, par exemple, Chem. Eng. Proc. 1998, 37, 55-59). Ces emballements se traduisent par une élévation très marquée de la température et de la pression, donc par des éclatements des organes de sécurité de l'installation. L'emballement conduit par conséquent irrémédiablement à des arrêts non désirés de la production. On cherche donc à éviter ces arrêts le plus possible et un moyen pour ce faire est de bien contrôler les débits des réactifs entrant dans le réacteur, en particulier le débit de la source de radicaux, c'est-à-dire de l'amorceur. En effet, l'injection d'une trop forte quantité de radicaux conduit à un emballement localisé dans une des zones du réacteur, emballement se propageant ensuite très rapidement à tout le réacteur. Il existe donc une teneur en radicaux à ne pas dépasser pour ne pas provoquer l'emballement de la polymérisation.

Il est cependant connu d'une manière générale que les polymérisations radicalaires peuvent être contrôlées à l'aide de radicaux libres stables, ce contrôle permettant notamment d'obtenir des polymères présentant des distributions de masses moléculaires étroites. C'est ainsi que le brevet américain US-A-5 449 724 décrit un procédé de polymérisation radicalaire consistant à chauffer à une température d'environ 40°C à environ 500°C et sous une pression d'environ 50 MPa à 500 MPa, un mélange se composant d'un amorceur de radicaux libres, d'un radical libre stable et de l'éthylène, afin de former une résine thermoplastique, laquelle a une distribution des masses moléculaires d'environ 1,0 à environ 2,0.

Par ailleurs, il est connu, par la demande de brevet internationale WO 99/03894, de contrôler la polymérisation radicalaire de monomères par l'utilisation, comme amorceurs de (co)polymérisation, d'alcoxyamines particulières, ces monomères étant le styrène, les styrènes substitués, les diènes conjugués, l'acroléine, l'acétate de vinyle, les anhydrides d'acides (alkyl)acryliques, les sels d'acides (alkyl)acryliques, les esters (alkyl)acryliques et les alkylacrylamides. Il n'est pas fait mention de l'éthylène comme monomère. Cette polymérisation est conduite sous basse pression et à une température comprise entre 50 et 180°C, de préférence entre 80 et 150°C, le contrôle de la réaction n'étant plus possible au-delà de 180°C. Autrement dit, un tel procédé ne pourrait fonctionner pour la (co)polymérisation de l'éthylène sous haute pression, dans laquelle les conditions de température dépassent le plus souvent 180°C. Ce procédé présente par ailleurs la limitation suivant laquelle les polymères obtenus ont de faibles masses moléculaires (ne dépassant pas 15 000 dans les exemples).

Recherchant à perfectionner le procédé connu de (co)polymérisation radicalaire contrôlée de l'éthylène sous haute pression, la Société déposante a maintenant découvert que, si l'on engage en (co) polymérisation un amorceur-contrôleur susceptible de fournir au moins un radical libre amorceur et au moins un radical libre stable, plus précisément un radical libre stable dans les conditions particulières de température mises en jeu dans cette (co) polymérisation haute pression, on contrôle cette dernière dans des conditions particulièrement favorables, tout en contrôlant aussi la stabilité réactionnelle. Les contrôleurs-amorceurs préférés de la présente invention, qui seront décrits ci-après, constituent une famille de composés, qui n'est pas préconisée selon WO 99/03894. Il n'était donc pas évident de parvenir à contrôler ainsi la (co)polymérisation haute pression de l'éthylène, avec une plus grande efficacité qu'avec l'emploi d'un amorceur et d'un radical libre stable introduits séparément, et avec la constatation, également surprenante, que la (co)polymérisation de l'éthylène se déroule avec une nettement plus grande vitesse. De plus, il n'y a pas, avec le procédé de l'invention, de limitation des masses moléculaires des (co)polymères obtenus.

En outre, une autre conséquence de la présente invention est que, dans le cas où l'amorceur-contrôleur choisi est tel qu'il fournit un radical libre macroamorceur, l'on parvient à des copolymères à blocs, pour lesquels au moins l'un des blocs contient de l'éthylène comme constituant. Or, les copolymères de l'éthylène préparés sous haute pression ont actuellement des structures statistiques et il n'était pas possible jusqu'ici d'obtenir de tels copolymères à blocs ayant un bloc à base d'éthylène. Il est bien connu que l'organisation de copolymères à blocs peut conduire à des propriétés physico-chimiques nettement meilleures que les copolymères statistiques. La présente invention permet donc de parvenir à l'obtention de matériaux nouveaux ayant des propriétés nouvelles.

La présente invention a donc d'abord pour objet un procédé de polymérisation ou de copolymérisation radicalaire de l'éthylène sous haute pression, en présence d'au moins un composé amorceur-contrôleur de polymérisation susceptible de fournir, par décomposition dans les conditions de polymérisation ou copolymérisation :
- au moins un radical libre amorceur (Z) qui porte au moins un site d'amorçage de la (co)polymérisation ; et
- au moins un radical libre stable (SFR) qui porte au moins un site présentant l'état de radical stable et qui est stable dans les conditions de polymérisation,
avec au total autant de sites d'amorçage que de sites présentant l'état de radical stable.

Autrement dit, lorsque l'amorceur-contrôleur se dissocie, il produit dans le milieu autant de sites amorceurs que de sites radicaux stables. Dans le cas le plus simple, l'amorceur-contrôleur est tel qu'il se dissocie en donnant un radical libre amorceur et un radical libre stable, les deux radicaux étant monofonctionnels. On peut également utiliser des amorceurs-contrôleurs qui se dissocient en donnant un radical libre amorceur n-fonctionnel et n radicaux libres stables monofonctionnels, ou réciproquement. Des exemples de différents amorceurs-contrôleurs sont indiqués ci-après.

Le (co)polymère en croissance se place donc entre la partie "amorceur" et la partie "contrôleur" que constitue le radical libre stable SFR.

La présente invention fait donc intervenir la formation d'un radical libre stable. Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié à une chaîne de polymère par une liaison covalente issue d'une réaction de couplage entre un radical centré sur un atome d'oxygène et un radical centré sur un atome de carbone. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

### PARTIE "AMORCEUR"

- Conformément à un premier mode de réalisation, on choisit, comme composé amorceur-contrôleur, un composé susceptible de fournir au moins un radical Z monofonctionnel choisi parmi ceux des formules (Ia) ou (Ib) : 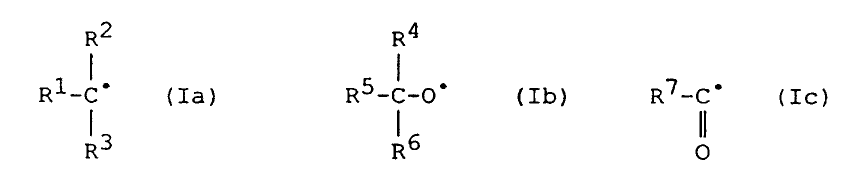 dans lesquelles :
   - R¹, R², R³, R⁴, R⁵, R⁶, R⁷ représentent chacun indépendamment :
      - alkyle en C₁₋₂₄ éventuellement substitué ;
      - aryle en C₁₋₂₄ éventuellement substitué ;
      R¹, R², R³, R⁴, R⁵ et R⁶ pouvant également désigner chacun indépendamment un atome d'hydrogène.
   A titre d'exemples de ce premier mode de réalisation, on choisit, comme composé amorceur-contrôleur, un composé susceptible de fournir au moins un radical Z monofonctionnel choisi parmi ceux des formules (Ia₁), (Ia₂) ou (Ia₃) : 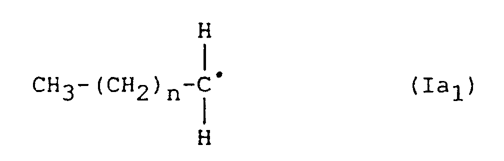 avec n = 0 ou entier de 1 à 23 ; 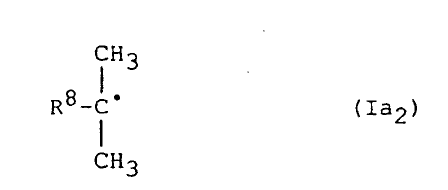 avec R⁸ représentant hydrogène, méthyle ou éthyle ; et 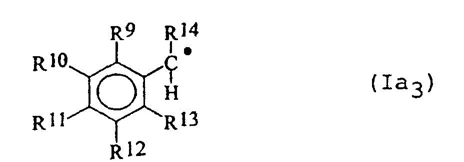 avec :
   - R⁹, R¹⁰, R¹¹, R¹² et R¹³ représentant chacun indépendamment alkyle, aryle ou halogène ; et
   - R¹⁴ représentant alkyle ou aryle.
- Conformément à un second mode de réalisation, on choisit, comme composé amorceur contrôleur, un composé susceptible de fournir un radical Z de formule (II) :

   Z¹-(PM)¹-[(PM)²]^{•} (II)

   dans laquelle :
   - Z¹ représente le fragment amorceur d'un amorceur radicalaire ;
   - (PM)¹ représente un bloc polymère formé par polymérisation ou copolymérisation radicalaire vivante d'au moins un monomère polymérisable par voie radicalaire en présence d'un amorceur producteur de radicaux libres Z¹•; et
   - (PM)², dont la présence est facultative, représente un autre bloc polymère, différent de (PM)¹, formé par polymérisation ou copolymérisation radicalaire vivante d'au moins un monomère polymérisable par voie radicalaire en présence de l'amorceur Z¹-(PM)^{1•}.
   On peut citer comme exemples de blocs (PM)¹ et (PM)², ceux des formules : 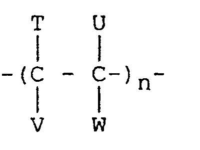 où :
   - T et U représentent chacun indépendamment hydrogène ou un reste alkyle en C₁₋₁₀, substitué ou non ;
   - V et W représentent chacun indépendamment hydrogène, alkyle, substitué ou non, aryle, substitué ou non, -COOH, -COOR¹⁵, -CN, -CONH₂, -CONHR¹⁶, -CONR¹⁷R¹⁸, 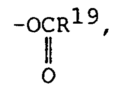 -OR²⁰ R¹⁵ à R²⁰ représentant chacun indépendamment alkyle, substitué ou non, ou aryle, substitué ou non ; et
   - n désigne le degré de polymérisation, pouvant notamment aller jusqu'à 10 000.
   Ce second mode de réalisation concerne donc l'emploi de macroamorceurs-contrôleurs, dont la partie "macroamorceur" est préparée, de façon connue, par (co)polymérisation radicalaire vivante, sous haute pression (par exemple > 100 MPa) dans le cas où de l'éthylène entre dans la préparation d'au moins l'un des blocs (T = U = V = W = H), ou sous basse pression dans le cas contraire.
- Conformément à un troisième mode de réalisation, on choisit, comme composé amorceur-contrôleur, un composé susceptible de fournir un radical Z polyfonctionnel, portant une pluralité de sites d'amorçage de type 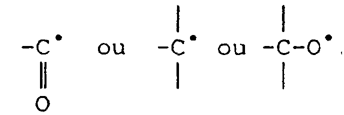 La fonctionnalité peut varier entre 2 et 10, étant de préférence entre 2 et 4.

A titre d'exemple, on peut citer un composé susceptible de fournir un radical Z polyfonctionnel de formule :

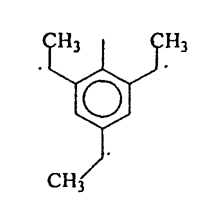

### PARTIE "CONTRÔLEUR"

On choisit avantageusement comme composé amorceur-contrôleur un composé susceptible de fournir au moins un radical libre stable nitroxyle, comportant au moins un groupement =N-O•.

On choisit notamment le ou les radicaux libres stables parmi les radicaux nitroxyde, c'est-à-dire contenant le groupement =N-O•, en particulier parmi ceux des formules (IIIa), (IIIb) ou (IIIc) : 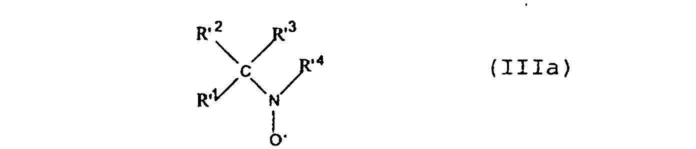 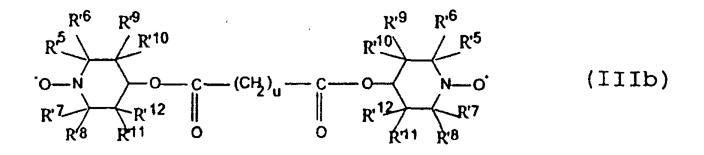 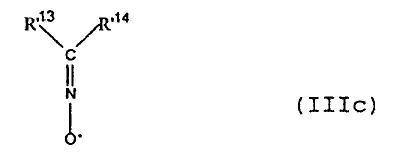 dans lesquelles :
- R'¹ à R'³, R'⁵ à R'⁸ et R'¹³ et R'¹⁴ représentent chacun indépendamment :
   (a) un atome d'hydrogène ;
   (b) un atome d'halogène, tel que le chlore, le brome ou l'iode ;
   (c) un groupement hydrocarboné, saturé ou insaturé, linéaire, ramifié ou mono- ou polycyclique, et pouvant être substitué par au moins un halogène ;
   (d) un groupement ester -COOR'¹⁵ ou un groupement alcoxyle -OR'¹⁶, R'¹⁵ et R'¹⁶ représentant un groupement hydrocarboné tel que défini au point (c) ci-dessus ;
   (e) une chaîne de polymère pouvant, par exemple, être une chaîne de poly(méthacrylate d'alkyle) ou de poly(acrylate d'alkyle), comme le poly(méthacrylate de méthyle), de polydiène comme le polybutadiène, de polyoléfine comme le polyéthylène ou le polybutadiène, mais étant, de préférence, une chaîne de polystyrène ;
- R'⁴ a les significations définies aux points (a), (b), (c), (d) et (e) ci-dessus ;
- R'⁹ à R'¹², identiques ou différents, ont les significations définies aux points (a) à (e) ci-dessus et peuvent en outre représenter un groupement hydroxyde ou un groupement acide, tel que -COOH ou -SO₃H ;
- R'³ et R'⁴ pouvant être reliés entre eux, et - dans le cas où R'⁴ représente un reste -CR"¹R"²R"³ (R"¹ à R"³ ayant indifféremment les significations de R'¹ à R'³) R'³ pouvant être relié à R"³ pour former un hétérocycle comportant l'atome d'azote de 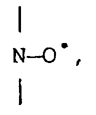 ledit hétérocycle pouvant être saturé ou insaturé, pouvant comporter dans le cycle au moins un autre hétéroatome et/ou au moins un groupement 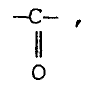 et insaturé ;
- deux parmi R'¹ à R'³, R'⁵ et R'⁶, R'⁷ et R'⁸, R'⁹ et R'¹⁰, R'¹¹ et R'¹², R'⁶ et R'⁹, R'⁸ et R'¹¹, R'¹³ et R'¹⁴ et - dans le cas où R'⁴ représente un reste -CR"¹R"²R"³, R'³ et R"³ - pouvant indépendamment être reliés entre eux pour former, avec l'atome de carbone qui les porte, un cycle ou un hétérocycle saturé ou insaturé ;
- u est un entier non nul, par exemple de 1 à 18.

A titre d'exemples des groupements hydrocarbonés tels que définis au point (c) ci-dessus, on peut citer ceux ayant de 1 à 20 atomes de carbone, comme les radicaux alkyle linéaires, ramifiés ou cycliques, et les radicaux aryle tels que phényle ou naphtyle, et les radicaux comprenant au moins un cycle aromatique qui peut être substitué par exemple par un radical alkyle en C₁-C₄, comme les radicaux aralkyle, tels que benzyle.

On peut mentionner en particulier les radicaux nitroxyde comprenant un enchaînement de formule : 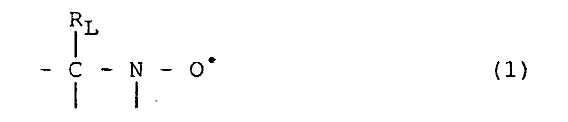 dans laquelle le radical R_{L} présente une masse molaire supérieure à 15. le radical R_{L}, monovalent, est dit en position β par rapport à l'atome d'azote du radical nitroxyde. Les valences restantes de l'atome de carbone et de l'atome d'azote dans la formule (1) peuvent être liées à des radicaux divers tels qu'un atome d'hydrogène, un radical hydrocarboné comme un radical alkyle, aryle ou aralkyle, comprenant de 1 à 10 atomes de carbone. Il n'est pas exclu que l'atome de carbone et l'atome d'azote dans la formule (1) soient reliés entre eux par l'intermédiaire d'un radical bivalent, de façon à former un cycle. De préférence cependant, les valences restantes de l'atome de carbone et de l'atome d'azote de la formule (1) sont liées à des radicaux monovalents. De préférence, le radical R_{L} présente une masse molaire supérieure à 30. Le radical R_{L} peut par exemple avoir une masse molaire comprise entre 40 et 450. Le radical R_{L} peut également comprendre au moins un cycle aromatique comme pour le radical phényle ou le radical naphtyle, ce dernier pouvant être substitué, par exemple par un radical alkyle comprenant de 1 à 4 atomes de carbone.

Une famille particulière des radicaux nitroxyde qui peuvent être envisagés conformément à la présente invention est celle des radicaux nitroxyde de formule (Ia) dans laquelle R'³ et R'⁴ (ou R'³ et R"³) sont reliés entre eux et qui sont choisis notamment parmi : 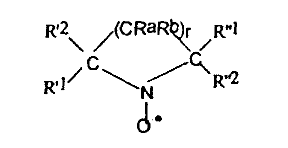 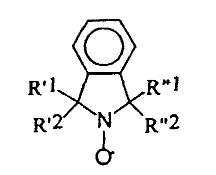 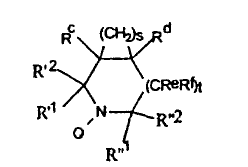 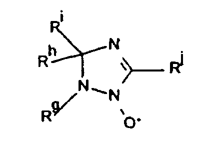 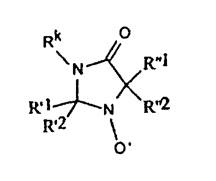 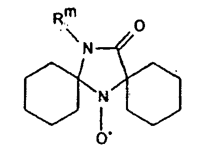 où :
- R^{a} à R^{k} et R^{m} ont indépendamment les significations données pour R⁹ à R¹², les R^{a} et R^{b} et R^{e} et R^{f} pouvant être identiques ou différents lorsqu'ils sont portés par des atomes de carbone différents ;
- r vaut 2 ou 3 ou 4 ;
- s est un entier non nul, en particulier de 1 à 10 ;
- t vaut 0, 1 ou 2.

Par ailleurs, à titre d'exemples particuliers de radicaux nitroxyde, on peut indiquer les suivants :
- le 2,2,5,5 tétraméthyl-1-pyrrolidinyloxy (généralement commercialisé sous la marque PROXYL) : 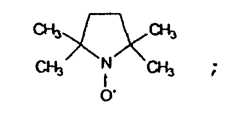
- le 3-carboxy-2,2,5,5-tétraméthyl-pyrrolidinyloxy (communément appelé 3-carboxy PROXYL) ;
- le 2,2,6,6-tétraméthyl-1-pipéridinyloxy (communément appelé TEMPO) : 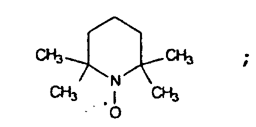
- le 4-hydroxy-2,2,6,6-tétraméthyl-1-pipéridinyloxy (communément appelé le 4-hydroxy-TEMPO) ;
- le 4-méthoxy-2,2,6,6-tétraméthyl-1-pipéridinyloxy (communément appelé le 4-méthoxy-TEMPO) ;
- le 4-oxo-2,2,6,6-tétraméthyl-1-pipéridinyloxy (communément appelé le 4-oxo-TEMPO) ;
- le bis-(1-oxyl-2,2,6,6-tétraméthylpipéridine-4-yl)sébacate, représenté par la formule: 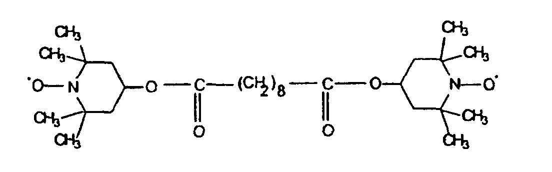 (commercialisé sous la marque "CXA 5415" par la Société "CIBA SPECIALTY CHEMICAL") ;
- le N-tertiobutyl-1-phényl-2-méthyl propyl nitroxyde : 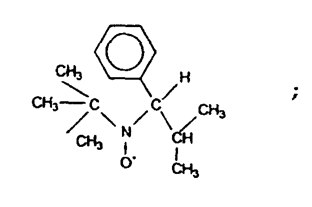 et
- le N-tertiobutyl-1-(2-naphtyl)-2-méthyl propyl nitroxyde.

De façon particulièrement préférée, on utilise cependant une alcoxyamine comme composé amorceur-contrôleur, et plus particulièrement une alcoxyamine dont l'atome d'azote du groupement nitroxyde fait partie d'un cycle en C₅₋₁₂ dont les autres atomes sont généralement des atomes de carbone.

On peut également citer particulièrement les alcoxyamines dont le nitroxyde ne se décompose pas à plus de 50% pendant 2 heures à 180°C sous 200 MPa (2000 bar) dans l'heptane.

Les alcoxyamines sont des composés connus ou dont la fabrication a été décrite dans la littérature. On pourra entre autres se reporter à Macromolecules 1996, 29, 5245-5254, à Macromolecules 1996, 29, 7661-7670, ainsi qu'à la demande de brevet français n° 99-04405 du 8 avril 1999 au nom de la Société déposante.

Des exemples particuliers d'amorceurs-contrôleurs de la présente invention sont les suivants: 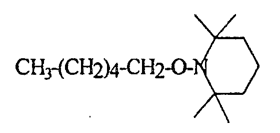 (2,2,6,6-tétraméthyl-1-pipéridinyloxyhexyle)

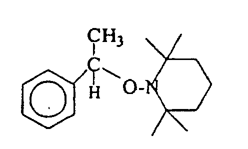

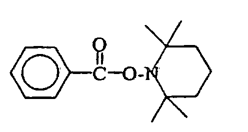

Conformément à la présente invention, le rapport du composé amorceur-contrôleur/monomère(s) est généralement compris dans la plage de 0,0001% à 10% en poids, en particulier dans la plage de 0,0005% à 5% en poids.

La (co)polymérisation de la présente invention est par ailleurs généralement conduite sous une pression de 150 à 300 MPa, en particulier de 150 à 250 MPa, et à une température de 100 à 300°C, en particulier de 180 à 250°C.

Il n'y a pas de limitation quant aux masses moléculaires des (co)polymères obtenus selon l'invention. Suivant les conditions de polymérisation ou copolymérisation, et en particulier la durée, la température, le degré de conversion de monomère en polymère ou copolymère, il est possible de réaliser des produits de masses moléculaires différentes. En particulier, dans le cas de la polymérisation de l'éthylène, le procédé de l'invention est mené à des température, pression et durée suffisantes pour que le polyéthylène obtenu ait une masse moléculaire moyenne en poids supérieure à 80 000 et une masse moléculaire moyenne en nombre supérieure à 20 000.

Le procédé selon l'invention peut être conduit en présence d'un solvant. On choisit le solvant notamment parmi le benzène, le toluène, le xylène, l'acétate d'éthyle, le méthanol, l'éthanol, le propanol, l'isopropanol, le butanol, l'isobutanol, l'alcool amylique, le diméthylsulfoxyde, le glycol, le diméthylformamide, le tétrahydrofuranne et leurs mélanges, le rapport en poids/ingrédients de polymérisation (à savoir monomère(s) + amorceur-contrôleur) étant avantageusement d'au plus 5.

Le procédé selon la présente invention peut également être conduit en présence d'un agent de transfert, dans les quantités usuelles. Les agents de transfert pouvant être utilisés sont bien connus de l'homme du métier spécialiste de la (co)polymérisation de l'éthylène sous haute pression. On peut citer notamment les alcanes, par exemple le butane, les alcènes, par exemple le propylène, et les dérivés oxygénés tels que, par exemple, les aldéhydes ou les alcools.

Conformément à la présente invention, l'éthylène peut être copolymérisé avec n'importe quel autre monomère présentant une double liaison carbone-carbone susceptible de polymériser ou copolymériser par voie radicalaire.

Le ou les monomères peuvent ainsi être choisis parmi les monomères vinyliques, allyliques, vinylidéniques, diéniques et oléfiniques (autre que l'éthylène).

Par monomères vinyliques, on entend notamment les (méth)acrylates, les monomères vinylaromatiques, les esters vinyliques, les éthers vinyliques, le (méth) acrylonitrile, le (méth)acrylamide et les mono- et di-(alkyl en C₁-C₁₈)-(méth)acrylamides, et les monoesters et diesters de l'anhydride maléique et de l'acide maléique.
- Les (méth)acrylates sont en particulier ceux des formules respectivement : 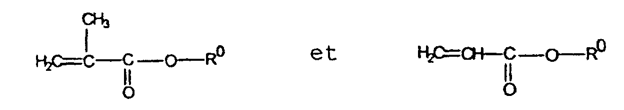 dans lesquelles R⁰ est choisi parmi les radicaux alkyle en C₁-C₁₈, linéaires ou ramifiés, primaires, secondaires ou tertiaires, cycloalkyle en C₅-C₁₈, (alcoxy en C₁-C₁₈) -alkyle en C₁-C₁₈, (alkylthio en C₁-C₁₈)-alkyle en C₁-C₁₈, aryle et arylalkyle, ces radicaux étant éventuellement substitués par au moins un atome d'halogène et/ou au moins un groupe hydroxyle, les groupes alkyle ci-dessus étant linéaires ou ramifiés ; et les (méth)acrylates de glycidyle, de norbornyle, d'isobornyle:
   Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. On peut citer en particulier le méthacrylate de méthyle.
   Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.
- Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, les styrènes substitués sur le cycle par un halogène, comme le chloro-2-styrène, le chloro-3-styrène, le chloro-4-méthyl-3-styrène, le tert.-butyl-3-styrène, le dichloro-2,4-styrène et le dichloro-2,6-styrène, le vinyl-1-naphtalène et le vinylanthracène.
- Comme esters vinyliques, on peut citer l'acétate de vinyle, le propionate de vinyle, le chlorure de vinyle et le fluorure de,vinyle, et comme éthers vinyliques, on peut citer le vinyl méthyl éther et le vinyl éthyl éther.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthylbutadiène, l'isoprène, le chloroprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène, le 1,5-cyclooctadiène, le bicyclo[2,2,2]octa-2,5-diène, le cyclopentadiène, le 4,7,8,9-tétrahydroindène, l'isopropylidène tétrahydroindène et le pipérylène.

Comme monomères oléfiniques, on peut citer les oléfines comportant de trois à vingt atomes de carbone et, en particulier, les alpha-oléfines de ce groupe. Comme oléfine, on peut citer le propylène, le 1-butène, le 4-méthyl-1-pentène, le 1-octène, le 1-hexène, l'isobutylène, le 3-méthyl-1-pentène, le 3-méthyl-1-butène, le 1-décène, le 1-tétradécène, ou leurs mélanges. Les monomères oléfiniques fluorés peuvent également être cités.

Comme monomère (co)polymérisable, on peut également citer les acides carboxyliques en C₃₋₈, à insaturation α ou β éthylénique, tels que l'acide maléique, l'acide fumarique, l'acide itaconique, l'acide acrylique, l'acide méthacrylique et l'acide crotonique ; les anhydrides d'acides carboxyliques à insaturation α ou β éthylénique, tels que l'anhydride maléique, l'anhydride itaconique.

Des comonomères préférés sont, entre autres, l'acétate de vinyle, l'acrylate de n-butyle, l'acrylate de 2-éthylhexyle, l'acrylate de méthyle, l'acrylate d'éthyle.

Le procédé selon l'invention est conduit dans un réacteur tubulaire ou autoclave ou une combinaison des deux.

Les procédés autoclave et tubulaire font tous deux partie des procédés de polymérisation dits "haute pression" connus de l'homme du métier. Ces deux procédés font intervenir la polymérisation de l'éthylène par voie radicalaire sous haute pression, généralement comprise entre 100 et 350 MPa et à des températures supérieures à la température de fusion du polyéthylène en formation. Le procédé tubulaire fait intervenir la polymérisation dans un réacteur tubulaire. Un réacteur tubulaire comprend des cylindres dont le diamètre interne est généralement compris entre 1 et 10 cm et dont la longueur va généralement de 0,1 à 3 km. Dans un réacteur tubulaire, le milieu réactionnel est animé d'une grande vitesse linéaire, généralement supérieure à 2 mètres par seconde et des temps de réaction courts, pouvant par exemple être compris entre 0,1 et 5 min.

La pression dans le réacteur tubulaire peut par exemple être comprise entre 200 et 350 MPa, de préférence entre 210 et 280 MPa, par exemple entre 230 et 250 MPa. La température dans le réacteur tubulaire peut aller de 120 à 350°C et de préférence de 150 à 300°C.

Le procédé autoclave fait intervenir la polymérisation dans un autoclave dont le rapport longueur / diamètre va généralement de 1 à 25 dans le cas d'un réacteur à zone unique. Dans le cas d'un réacteur à zones multiples, le rapport longueur de chaque zone / diamètre va généralement de 0,5 à 6, étant entendu que le milieu réactionnel s'écoule dans le sens de la longueur.

La pression dans le réacteur autoclave peut par exemple être comprise entre 100 et 250 MPa, de préférence entre 120 et 180 MPa, par exemple entre 140 à 170 MPa. La température dans le réacteur autoclave peut aller de 180 à 300°C de préférence de 240 à 290°C.

La présente invention porte également sur des copolymères à blocs pour lesquels au moins l'un des blocs comprend de l'éthylène comme constituant. Comme déjà indiqué ci-dessus, on prépare ces copolymères à blocs en utilisant les macroamorceurs-contrôleurs décrits ci-dessus avec référence au second mode de réalisation.

On peut citer en particulier les copolymères à blocs du type :
- Polystyrène (b) polyéthylène
- Polyacrylate (b) polyéthylène
- Polyméthacrylate (b) polyéthylène
- Poly(styrène(co)acrylate) (b) polyéthylène
- Polystyrène (b) poly(éthylène(co)acrylate)
- Polystyrène (b) poly(éthylène(co)acétate de vinyle),
de tels copolymères à blocs, de même que les homopolymères de l'éthylène et les copolymères statistiques obtenus selon l'invention, pouvant trouver de nombreuses applications en tant que base d'adhésifs, de liants de coextrusion, de films, de liants de bitumes, d'emballage, d'objets moulés, ...

On donne ci-après des exemples comparatifs et des exemples non limitatifs décrivant la préparation de polymères tels qu'obtenus suivant le procédé de la présente invention. Dans ces exemples, on a utilisé les abréviations suivantes :
- BPO : peroxyde de benzoyle
- DTBP : peroxyde de ditertiobutyle
- TEMPO: 2,2,6,6-tétraméthyl-1-pipéridinyloxy 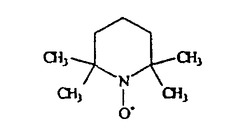
- Hexyl-TEMPO : 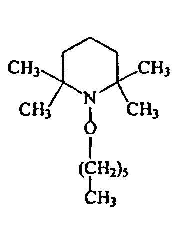
- CXA 5415 : bis-(1-oxyl-2,2,6,6-tétraméthylpipéridine-4-yl)sébacate : 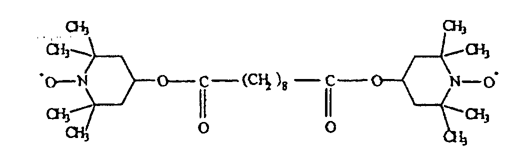 (commercialisé sous la marque "CXA 5415" par la Société "CIBA SPECIALTY CHEMICAL").

Dans ces exemples, on a apprécié le contrôle de la polymérisation à l'aide de la courbe In(1/(1-conversion)) en fonctions du temps. Plus la courbe s'écarte de la linéarité, moins le contrôle est bon. Par ailleurs, dans les Exemples 2 (comp.), 3, 4 (comp.) et 5, la vitesse moyenne de polymérisation (exprimée en min⁻¹) est la pente de la droite de régression tracée à partir de la courbe In (1/ (1 - conversion)).

### EXEMPLE 1 (Comparatif)

### Polymérisation non contrôlée de l'éthylène à 250 MPa et à 250°C avec le système d'amorçage BPO + TEMPO

Un réacteur métallique, en acier résistant à la haute pression, est préchauffé à l'aide de colliers chauffants à une température de 250°C. Après plusieurs rinçages du réacteur à l'éthylène à 6 MPa, puis à 100 MPa, le réacteur est chargé en éthylène (17,6 g), puis à l'aide d'une seringue, on injecte dans le réacteur :
- 0,016 g de BPO (210 ppm molaire de radicaux libres par rapport à l'éthylène)
- 0,013 g de TEMPO ; et
- 0,8 g de xylène.
Le rapport molaire TEMPO/BPO est de 1,25, ce qui correspond à un rapport SFR/Z de 0,63 (soit un rapport inférieur à 1,0).

La pression est ensuite augmentée vers 100 MPa à l'aide d'une pompe mécanique, puis à la valeur désirée de 250 MPa à l'aide d'une pompe manuelle.

La conversion est mesurée en continu à l'aide d'un spectromètre infrarouge relié au réacteur.

Il y a emballement de la polymérisation, si bien qu'aucun contrôle de la polymérisation n'est possible.

Cet exemple souligne qu'un rapport SFR/Z < 1 n'est pas suffisant pour contrôler la polymérisation. A l'inverse, il est maintenant bien connu qu'un rapport SFR/Z > 1 est défavorable à la vitesse de polymérisation (l'excès de radicaux stables ayant tendance à ralentir les polymérisations).

L'utilisation d'un amorceur-contrôleur apporte l'avantage d'obtenir d'office le rapport optimal SFR/Z = 1,0.

### EXEMPLE 2 (Comparatif)

### Polymérisation de l'éthylène à 170 MPa et à 230°C avec le système d'amorçage DTBP + TEMPO

On procède comme à l'Exemple comparatif 1, excepté que la charge d'éthylène est de 17,9 g, que l'on conduit la réaction à une température de 230°C au lieu de 250°C, et sous une pression de 170 MPa au lieu de 250 MPa, et que l'on remplace le système BPO + TEMPO par le système suivant :
- 0,005 g de DTBP (106 ppm molaire de radicaux libres par rapport à l'éthylène) ; et
- 0,011 g de TEMPO.
Le rapport molaire TEMPO/DTBP est de 2,0, ce qui correspond à un rapport SFR/Z de 1.

On obtient les conversions suivantes au cours du temps :

| Temps (min.) | Conversion (%) | ln(1/(1-conversion)) |
|---|---|---|
| 0 | 0 | 0 |
| 15 | 2,7 | 0,027 |
| 30 | 8,5 | 0,089 |
| 45 | 15,2 | 0,165 |
| 60 | 21,2 | 0,238 |

La vitesse moyenne de polymérisation est de 0,0951 min⁻¹.

### EXEMPLE 3

### Polymérisation de l'éthylène à 170 MPa et à 230°C avec l'amorceur-contrôleur hexyl-TEMPO

On reprend les conditions opératoires de l'Exemple 2, excepté que l'on remplace le système BPO + TEMPO par le composé "amorceur-contrôleur" suivant : 0,016 g d'hexyl-TEMPO (104 ppm molaire de radicaux libres par rapport à l'éthylène). Le rapport SFR/Z est de 1,0.

On obtient les conversions suivantes au cours du temps :

| Temps (min.) | Conversion (%) | In(1/(1-conversion)) |
|---|---|---|
| 0 | 0 | 0 |
| 15 | 10,9 | 0,115 |
| 30 | 21 | 0,236 |
| 45 | 28,2 | 0,331 |
| 60 | 34,7 | 0,426 |

La vitesse de polymérisation, qui est ici de 0,1224 min⁻¹ est plus élevée que pour l'Exemple comparatif 2 (soit 23% de plus), alors que les conditions opératoires sont les mêmes : pression, température et quantité de radicaux par rapport à l'éthylène. En outre, la courbe In (1/(1-conversion)) en fonction du temps est une droite, ce qui indique un bon contrôle de la polymérisation.

Des mesures de spectrométrie paramagnétique électronique sur l'hexyl-TEMPO montrent de plus qu'il est nécessaire d'élever la température au-delà de 200°C pour voir apparaître un signal. Cela signifie que la liaison C-O ne se rompt qu'à partir de cette température. Or, la liaison entre la chaîne de polyéthylène et le TEMPO (-CH₂-TEMPO) est de même nature. Il est donc nécessaire de chauffer au-delà de 200°C pour pouvoir rompre la liaison entre le TEMPO et le polymère. Les conditions du procédé de la présente invention sont donc différentes de celles du procédé selon WO 99/03894, pour laquelle la température ne doit pas dépasser 180°C, sous peine de perdre le contrôle de la polymérisation.

### EXEMPLE 4 (comparatif)

### Polymérisation de l'éthylène à 200 MPa et 220°C avec le système d'amorçage DTBP + CXA 5415

On reprend les conditions opératoires de l'Exemple 1, excepté que la charge d'éthylène est de 18,3 g, que l'on conduit la réaction à une température de 220°C au lieu de 250°C et à 200 MPa au lieu de 250 MPa, et que l'on remplace le système BPO + TEMPO par le système suivant :
- 0,0045 g de DTBP (94 ppm molaire de radicaux libres par rapport à l'éthylène) ; et
- 0,016 g de CXA 5415.
Le rapport molaire CXA 5415 / DTBP est de 1,0, ce qui équivaut à un rapport SFR/Z de 1,0.

On obtient les conversions suivantes au cours du temps :

| Temps (min.) | Conversion (%) | ln(1/(1-conversion)) |
|---|---|---|
| 0 | 0 | 0 |
| 15 | 0,3 | 0,003 |
| 30 | 0,7 | 0,007 |
| 45 | 2,2 | 0,022 |
| 60 | 4,7 | 0,048 |

La polymérisation est particulièrement lente (0,0008 min⁻¹) : on observe seulement 4,7% de conversion au bout d'une heure. De plus, la courbe In (1/(1-conversion)) présente une courbure marquée, ce qui signifie que la polymérisation n'est pas très bien contrôlée.

### EXEMPLE 5

### Polymérisation de l'éthylène à 200 MPa et 220°C avec l'amorceur-contrôleur hexyl-TEMPO

On reprend les conditions opératoires de l'Exemple comparatif 4, excepté que la charge d'éthylène est de 18,3 g et que l'on utilise à la place du système CXA 5415/DTBP, 0,0157 g d'Hexyl-TEMPO (99 ppm molaire de radicaux libres par rapport à l'éthylène).

On obtient les conversions suivantes au cours du temps :

| Temps (min.) | Conversion (%) | ln(1/(1-conversion)) |
|---|---|---|
| 0 | 0 | 0 |
| 15 | 9,3 | 0,098 |
| 30 | 13,3 | 0,143 |
| 45 | 16,8 | 0,184 |
| 60 | 20,4 | 0,228 |
| 75 | 27,1 | 0,316 |

La polymérisation présente une vitesse de polymérisation plus élevée que pour l'Exemple 4 comparatif, à savoir de 0,0038 min⁻¹ (soit 375% de plus qu'à l'Exemple comparatif 4), alors que les conditions opératoires sont identiques : pression, température et quantité de radicaux par rapport à l'éthylène. Au bout d'une heure, la conversion atteint déjà 20%. De plus, la courbe In(1/(1-conversion)) en fonction du temps est une droite, ce qui est indique un bon contrôle de la polymérisation.

Comme l'Exemple 3, cet exemple montre que l'hexyl-TEMPO permet de contrôler la polymérisation de l'éthylène plus efficacement que les mélanges amorceur + radical stable, et, de plus, qu'il procure des vitesses de polymérisation plus marquées.

### EXEMPLE 6

### Polymérisation de l'éthylène à 170 MPa et 250°C avec l'amorceur radicalaire Hexyl-TEMPO

On reprend les conditions opératoires de l'Exemple 1, excepté que la charge d'éthylène est de 17,0 g et que l'on utilise, à la place du système BPO + TEMPO 0,086 g d'hexyl-TEMPO (587 ppm molaire de radicaux libres par rapport à l'éthylène).

On obtient les conversions suivantes au cours du temps :

| Temps (min.) | Conversion (%) | In(1/(1-conversion)) |
|---|---|---|
| 0 | 0 | 0 |
| 15 | 31,8 | 0,383 |
| 30 | 52,9 | 0,753 |
| 45 | 62,1 | 0,970 |
| 60 | 68,2 | 1,146 |
| 75 | 72 | 1,273 |

Malgré les conditions sévères appliquées (quantité importante de radicaux libérés compte tenu de la forte quantité d'hexyl-TEMPO, et température élevée), la polymérisation reste contrôlée et ne présente pas d'emballement. De plus, la conversion est élevée. Il serait impossible de faire un tel essai sans radical stable car cela entraînerait un emballement très fort de la polymérisation.

## Revendications

1. Procédé de polymérisation ou de copolymérisation radicalaire de l'éthylène sous haute pression, en présence d'au moins un composé amorceur-contrôleur de polymérisation susceptible de fournir, par décomposition dans les conditions de polymérisation ou copolymérisation :
- au moins un radical libre amorceur (Z) qui porte au moins un site d'amorçage de la (co)polymérisation ; et
- au moins un radical libre stable (SFR) qui porte au moins un site présentant l'état de radical stable et qui est stable dans les conditions de polymérisation,
avec au total autant de sites d'amorçage que de sites présentant l'état de radical stable.

2. Procédé selon la revendication 1, **caractérisé par le fait que** l'on choisit, comme composé amorceur-contrôleur, un composé susceptible de fournir au moins un radical Z monofonctionnel choisi parmi ceux des formules (Ia) ou (Ib) ou (Ic) : 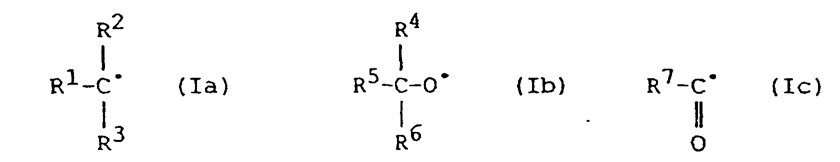 dans lesquelles :
- R¹, R², R³, R⁴, R⁵, R⁶, R⁷ représentent chacun indépendamment :
• alkyle en C₁₋₂₄ éventuellement substitué ;
• aryle en C₁₋₂₄ éventuellement substitué ;
R¹, R², R³, R⁴, R⁵ et R⁶ pouvant également désigner chacun indépendamment un atome d'hydrogène.

3. Procédé selon la revendication 1, **caractérisé par le fait que** l'on choisit, comme composé amorceur-contrôleur, un composé susceptible de fournir au moins un radical Z monofonctionnel choisi parmi ceux des formules (Ia₁), (Ia₂) ou (Ia₃): 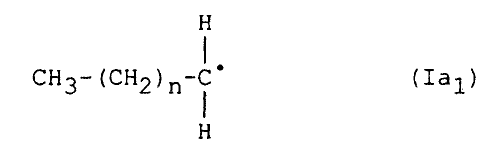 avec n = 0 ou entier de 1 à 23 ; 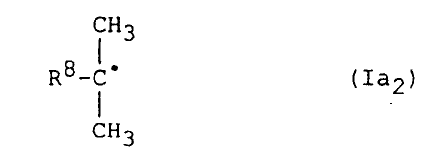 avec R⁸ représentant hydrogène, méthyle ou éthyle ; et 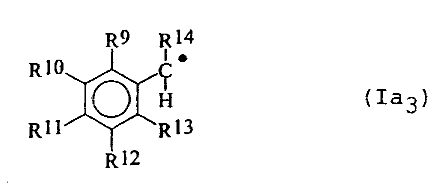 avec:
- R⁹, R¹⁰, R¹¹, R¹² et R¹³ représentant chacun indépendamment alkyle, aryle ou halogène ; et
- R¹⁴ représentant alkyle ou aryle.

4. Procédé selon la revendication 1, **caractérisé par le fait que** l'on choisit, comme composé amorceur contrôleur, un composé susceptible de fournir un radical Z de formule (II) :
Z¹-(PM)¹-[(PM)²]^{•} (II)
dans laquelle :
- Z¹ représente le fragment amorceur d'un amorceur radicalaire ; et
- (PM)¹ représente un bloc polymère formé par polymérisation ou copolymérisation radicalaire vivante d'au moins un monomère polymérisable par voie radicalaire en présence d'un amorceur producteur de radicaux libres Z^{1•} ; et
- (PM)², dont la présence est facultative, représente un autre bloc polymère, différent de (PM)¹, formé par polymérisation ou copolymérisation radicalaire vivante d'au moins un monomère polymérisable par voie radicalaire en présence de l'amorceur Z¹-(PM)^{1•}.

5. Procédé selon la revendication 4, **caractérisé par le fait que** les blocs (PM)¹ et (PM)² ont la formule : 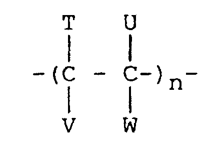 où :
- T et U représentent chacun indépendamment hydrogène ou un reste alkyle en C₁₋₁₀, substitué ou non ;
- V et W représentent chacun indépendamment hydrogène, alkyle, substitué ou non, aryle, substitué ou non, -COOH, -COOR¹⁵, -CN, -CONH₂, -CONHR¹⁶, -CONR¹⁷R¹⁸, 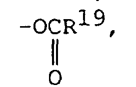 -OR²⁰, R¹⁵ à R²⁰ représentant chacun indépendamment alkyle, substitué ou non, ou aryle, substitué ou non ; et
- n désigne le degré de polymérisation, pouvant notamment aller jusqu'à 10 000.

6. Procédé selon la revendication 1, **caractérisé par le fait que** l'on choisit, comme composé amorceur-contrôleur, un composé susceptible de fournir un radical Z polyfonctionnel, portant une pluralité de sites d'amorçage de type

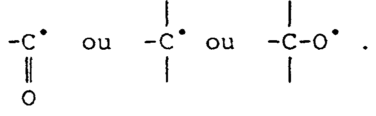

7. Procédé selon la revendication 6, **caractérisé par le fait que** l'on choisit, comme composé amorceur-contrôleur, un composé susceptible de fournir un radical Z polyfonctionnel de formule :

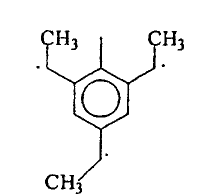

8. Procédé selon l'une des revendications 1 à 7, **caractérisé par le fait que** l'on choisit comme composé amorceur-contrôleur un composé susceptible de fournir au moins un radical libre stable nitroxyle, comportant au moins un groupement =N-O^{•}.

9. Procédé selon la revendication 8, **caractérisé par le fait que** l'on choisit comme composé amorceur-contrôleur un composé susceptible de fournir au moins un radical nitroxyle choisi parmi ceux des formules (IIIa), (IIIb) ou (IIIc) . 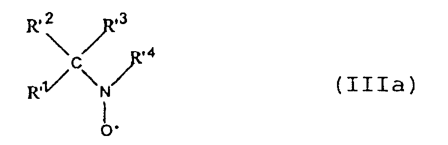 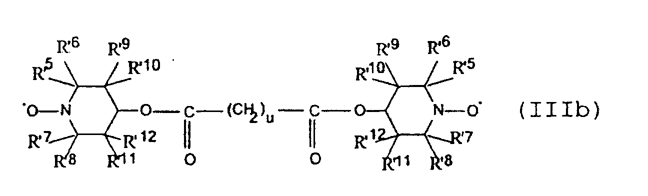 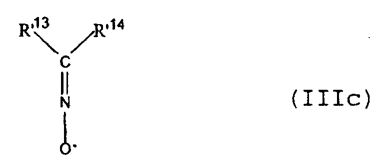 dans lesquelles :
- R'¹ à R'³, R'⁵ à R'⁸ et R'¹³ et R'¹⁴ représentent chacun indépendamment :
(a) un atome d'hydrogène ;
(b) un atome d'halogène ;
(c) un groupement hydrocarboné, saturé ou insaturé, linéaire, ramifié ou mono- ou polycyclique, et pouvant être substitué par au moins un halogène ;
(d) un groupement ester -COOR'¹⁵ ou un groupement alcoxyle -OR'¹⁶, R'¹⁵ et R'¹⁶ représentant un groupement hydrocarboné tel que défini au point (c) ci-dessus ;
(e) une chaîne de polymère ;
- R'⁴ a les significations définies aux points (a), (b), (c), (d) et (e) ci-dessus ;
- R'⁹ à R'¹², identiques ou différents, ont les significations définies aux points (a) à (e) ci-dessus et peuvent en outre représenter un groupement hydroxyde
ou un groupement acide, tel que -COOH ou -SO₃H;
- R'³ et R'⁴ pouvant être reliés entre eux, et - dans le cas où R'⁴ représente un reste -CR"¹R"²R"³ (R"¹ à R"³ ayant indifféremment les significations de R'¹ à R'³) R'³ pouvant être relié à R"³ pour former un hétérocycle comportant l'atome d'azote de 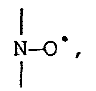 , ledit hétérocycle pouvant être saturé ou insaturé, pouvant comporter dans le cycle au moins un autre hétéroatome et/ou au moins un groupement 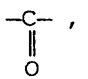 et pouvant également comporter un cycle accolé, saturé ou insaturé ;
- deux parmi R'¹ à R'³, R'⁵ et R'⁶, R'⁷ et R'⁸, R'⁹ et R'¹⁰, R'¹¹ et R'¹², R'⁶ et R'⁹, R'⁸ et R'¹¹, R'¹³ et R'¹⁴ et - dans le cas où R' ⁴ représente un reste
- CR"¹R"²R"³, R'³ et R"³ - pouvant indépendamment être reliés entre eux pour former, avec l'atome de carbone qui les porte, un cycle ou un hétérocycle saturé ou insaturé ;
- u est un entier non nul.

10. Procédé selon la revendication 9, **caractérisé par le fait que** l'on choisit comme composé amorceur-contrôleur un composé susceptible de fournir au moins un radical nitroxyle de formule (IIIa) dans lesquels R'³ et R'⁴ (ou R'³ et R"³) sont reliés entre eux, parmi : 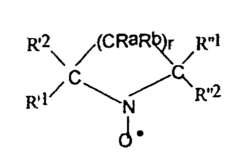 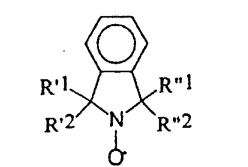 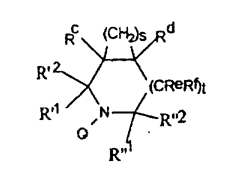 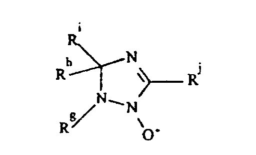 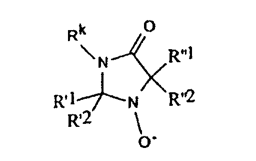 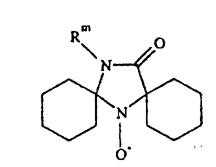 où :
- R^{a} à R^{k} et R^{m} ont indépendamment les significations données pour R'⁹ à R'¹², les R^{a} et R^{b} et R^{e} et R^{f} pouvant être identiques ou différents lorsqu'ils sont portés par des atomes de carbone différents ;
- r vaut 2 ou 3 ou 4 ;
- s est un entier non nul ; et
- t vaut 0, 1 ou 2.

11. Procédé selon l'une des revendications 9 et 10, **caractérisé par le fait que** l'on choisit comme composé amorceur-contrôleur un composé susceptible de fournir au moins un radical stable nitroxyde parmi :
• le 2,2,5,5 tétraméthyl-1-pyrrolidinyloxy ;
• le 3-carboxy-2,2,5,5-tétraméthyl-pyrrolidinyloxy ;
• le 2,2,6,6-tétraméthyl-1-pipéridinyloxy ;
• le 4-hydroxy-2,2,6,6-tétraméthyl-1-pipéridinyloxy ;
• le 4-méthoxy-2,2,6,6-tétraméthyl-1-pipéridinyloxy ;
• le 4-oxo-2,2,6,6-tétraméthyl-1-pipéridinyloxy ;
• le bis-(1-oxyl-2,2,6,6-tétraméthylpipéridine-4-yl)sébacate ;
• le N-tertiobutyl-1-phényl-2-méthyl propyl nitroxyde ; et
• le N-tertiobutyl-1-(2-naphtyl)-2-méthyl propyl nitroxyde.

12. Procédé selon l'une des revendications 1 à 11, **caractérisé par le fait que** l'on utilise une alcoxyamine comme amorceur-contrôleur.

13. Procédé selon l'une des revendications 1 à 11, **caractérisé par le fait que** l'on utilise, comme composé amorceur-contrôleur, une alcoxyamine dont le nitroxyde ne se décompose pas à plus de 50% pendant 2 heures à 180°C sous 200 MPa dans l'heptane.

14. Procédé selon l'une des revendications 1 à 11, **caractérisé par le fait que** l'on utilise, comme amorceur-contrôleur, un composé choisi parmi :

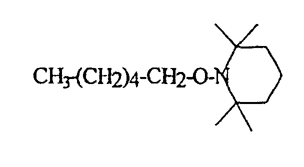

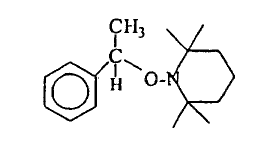

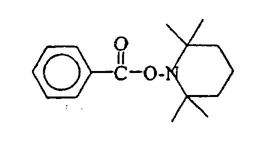

15. Procédé selon l'une des revendications 1 à 14, **caractérisé par le fait que** le rapport du composé amorceur-contrôleur/monomère(s) est compris dans la plage de 0,0001% à 10% en poids.

16. Procédé selon la revendication 15, **caractérisé par le fait que** le rapport du composé amorceur-contrôleur/monomère(s) est compris dans la plage de 0,0005% à 5% en poids.

17. Procédé selon l'une des revendications 1 à 16, **caractérisé par le fait qu'**il est conduit sous une pression de 150 à 300 MPa.

18. Procédé selon la revendication 17, **caractérisé par le fait qu'**il est conduit sous une pression de 150 à 250 MPa.

19. Procédé selon l'une des revendications 1 à 18, **caractérisé par le fait qu'**il est conduit à une température de 100 à 300°C.

20. Procédé selon la revendication 19, **caractérisé par le fait qu'**il est conduit à une température de 180 à 250°C.

21. Procédé selon l'une des revendications 1 à 20, pour la polymérisation de l'éthylène, **caractérisé par le fait qu'**il est mené à des température, pression et durée suffisantes pour que le polyéthylène obtenu ait une masse moléculaire moyenne en poids supérieure à 80 000 et une masse moléculaire moyenne en nombre supérieure à 20 000.

22. Procédé selon l'une des revendications 1 à 21, **caractérisé par le fait qu'**il est conduit en présence d'un solvant.

23. Procédé selon la revendication 22, **caractérisé par le fait que** l'on choisit le solvant parmi le benzène, le toluène, le xylène, l'acétate d'éthyle, le méthanol, l'éthanol, le propanol, l'isopropanol, le butanol, l'isobutanol, l'alcool amylique, le diméthylsulfoxyde, le glycol, le diméthylformamide, le tétrahydrofuranne et leurs mélanges.

24. Procédé selon l'une des revendications 22 et 23, **caractérisé par le fait que** le rapport en poids solvant/ingrédients de polymérisation est d'au plus 5.

25. Procédé selon l'une des revendications 1 à 24, **caractérisé par le fait qu'**il est conduit en présence d'un agent de transfert.

26. Procédé selon l'une des revendications 1 à 25, **caractérisé par le fait qu'**il consiste en une copolymérisation de l'éthylène avec au moins un comonomère choisi parmi les monomères vinyliques, allyliques, vinylidéniques, diéniques et oléfiniques.

27. Procédé selon l'une des revendications 1 à 26, **caractérisé par le fait qu'**il est conduit dans un réacteur tubulaire ou autoclave ou une combinaison des deux.

28. Copolymère à blocs obtenu par polymérisation ou copolymérisation radicalaire contrôlée de l'éthylène sous haute pression en présence d'au moins un composé amorceur à contrôleur de polymérisation ayant fourni, par décomposition dans les conditions de polymérisation ou de copolymérisation:
- au moins un radical libre amorceur (Z) qui porte au moins un site d'amorçage de la (co) polymérisation et qui a la formule (II):
Z¹-(PM)¹-[ (PM)²]^{•} (II)
dans laquelle :
- Z¹ représente le fragment amorceur d'un amorceur radicalaire ; et
- (PM)¹ représente un bloc polymère formé par polymérisation ou copolymérisation radicalaire vivante d'au moins un monomère polymérisable par voie radicalaire en présence d'un amorceur producteur de radicaux libres Z^{1·} ; et
- (PM)², dont la présence est facultative, représente un autre bloc polymère, différent de (PM)¹, formé par polymérisation ou copolymérisation radicalaire vivante d' au moins un monomère polymérisable par voie radicalaire en présence de l'amorceur Z¹-(PM)^{1•} ; et
- au moins un radical libre stable (SFR) qui porte au moins un site présentant l'état de radical stable et qui est stable dans les conditions de polymérisation.

29. Copolymère à blocs selon la revendication 28, **caractérisé par le fait que** les blocs (PM)¹ et (PM)² ont la formule : 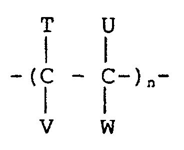 où :
- T et U représentent chacun indépendamment hydrogène ou un reste alkyle en C₁₋₁₀, substitué ou non ;
- V et W représentent chacun indépendamment hydrogène, alkyle, substitué ou non, aryle, substitué ou non, -COOH, -COOR¹⁵, -CN, -CONH₂, -CONHR¹⁶, -CONR¹⁷R¹⁸, 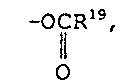 -OR²⁰, R¹⁵ à R²⁰ représentant chacun indépendamment alkyle, substitué ou non, ou aryle, substitué ou non ; et
- n désigne le degré de polymérisation, pouvant notamment aller jusqu'à 10 000.

## Patentansprüche

1. Verfahren zur radikalischen Polymerisation oder Copolymerisation von Ethylen unter hohem Druck in Gegenwart von wenigstens einer polymerisationsinitiierenden-steuernden Verbindung, wobei die Verbindung unter Zersetzung unter Polymerisations- oder Copolymerisationsbedingungen bildet:
- wenigstens ein initierendes freies Radikal (Z), welches wenigstens eine Stelle zur Initiierung der (Co)polymerisation aufweist; und
- wenigstens ein stabiles freies Radikal (FR), welches wenigstens eine den freien Radikalzustand zeigende Stelle aufweist, wobei dieses unter Polymerisationsbedingungen stabil ist,
mit insgesamt genau so vielen initiierenden Stellen wie Stellen, die den freien Radikalzustand zeigen.

2. Verfahren gemäss Anspruch 1, **dadurch gekennzeichnet, dass** eine Auswahl getroffen wird, als initiierend-steuernde Verbindung, aus einer wenigstens ein monofunktionelles Radikal Z bildenden Verbindung, ausgewählt aus denen der Formeln (Ia) oder (Ib) oder (Ic): 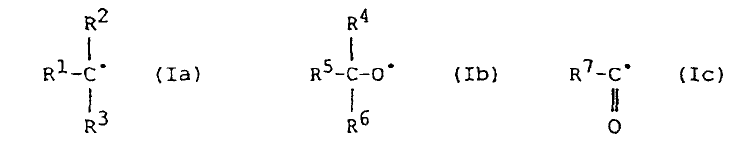 in denen:
- R¹, R², R³, R⁴, R⁵, R⁶, R⁷ jeweils unabhänging bedeuten:
• optional substituiertes C₁₋₂₄-Alkyl;
• optional substituiertes C₁₋₂₄-Aryl;
R¹, R², R³, R⁴, R⁵ und R⁶ gleichermassen jeweils unabhängig voneinander ein Wasserstoffatom bezeichnen können.

3. Verfahren gemäss Anspruch 1, **dadurch gekennzeichnet, dass** eine Auswahl getroffen wird, als initiierend-steuernde Verbindung, aus einer wenigstens ein monofunktionelles Radikal Z bildenden Verbindung, ausgewählt aus denen der Formeln (Ia₁) oder (Ia₂) oder (Ia₃): 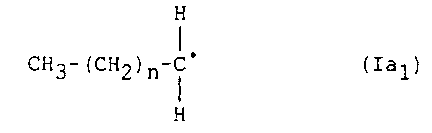 mit n = 0 oder einer ganzen Zahl von 1 bis 23; 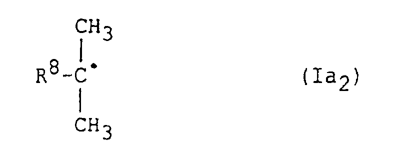 mit R⁸ Wasserstoff, Methyl oder Ethyl bedeutend; und 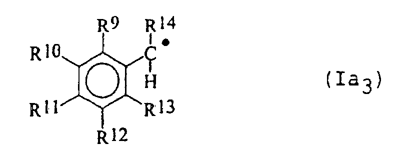 mit:
- R⁹, R¹⁰, R¹¹, R¹² und R¹³ jeweils unabhängig Alkyl, Aryl oder Halogen bedeutend; und
- R¹⁴ Alkyl oder Aryl bedeutend.

4. Verfahren gemäss Anspruch 1, **dadurch gekennzeichnet, dass** eine Auswahl getroffen wird, als initiierend-steuernde Verbindung, aus einer wenigstens ein Radikal Z bildenden Verbindung der Formel (II):
Z¹-(PM)¹-[(PM)²)]^{•} (II)
in der:
- Z¹ das Initiierungsfragment eines Radikalinitiators bedeutet; und
- (PM)¹ ein durch lebende radikalische Polymerisation oder Copolymerisation von wenigstens einem auf radikalische Weise polymerisierbaren Monomer in Gegenwart eines freie Radikale Z^{1•} erzeugenden Initiators gebildetes Blockpolymer bedeutet; und
- (PM)², dessen Gegenwart optional ist, ein weiteres, von (PM)¹ verschiedenes Block-Polymer bedeutet, das durch lebende radikalische Polymerisation oder Copolymerisation von wenigstens einem auf radikalische Weise polymerisierbaren Monomer in Gegenwart des Initiators Z¹-(PM)^{1•} gebildet ist.

5. Verfahren gemäss Anspruch 4, **dadurch gekennzeichnet, dass** die Blöcke (PM)¹ und (PM)² die Formel besitzen: 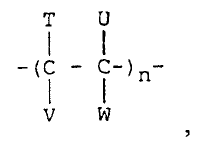 worin:
- T und U jeweils unabhängig Wasserstoff oder einen substituierten oder nicht substituierten C₁₋₁₀-Alkylrest bedeuten;
- V und W jeweils unabhängig Wasserstoff bedeuten, substituiertes oder nicht substituiertes Alkyl, substituiertes oder nicht substituiertes Aryl, -COOH, -COOR¹⁵, -CN, -CONH₂, -CONHR¹⁶, -CONR¹⁷R¹⁸, -OC(O)R¹⁹, -OR²⁰, wobei R¹⁵ bis R²⁰ jeweils unabhängig substituiertes oder nicht substituiertes Alkyl, substituiertes oder nicht substituiertes Aryl bedeuten; und
- n den Polymerisationsgrad bezeichnet, der insbesondere bis 10.000 reichen kann.

6. Verfahren gemäss Anspruch 1, **dadurch gekennzeichnet, dass** eine Auswahl getroffen wird, als initiierend-steuernde Verbindung, aus einer ein polyfunktionelles Radikal Z bildenden Verbindung, welche eine Mehrzahl von Initiienmgsstellen des Typs 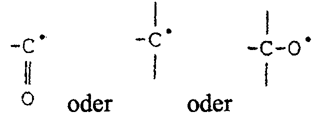 aufweist.

7. Verfahren nach Anspruch 6, **dadurch gekennzeichnet, dass** eine Auswahl getroffen wird, als initiierend-steuernde Verbindung, aus einer Verbindung, die ein polyfunktionelles Radikal Z der Formel: 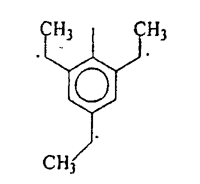 bilden kann.

8. Verfahren gemäss einem der Ansprüche 1 bis 7, **dadurch gekennzeichnet, dass** eine Auswahl getroffen wird, als initüerend-steuernde Verbindung, aus einer Verbindung, die wenigstens ein freies, stabiles Nitroxyl-Radikal bilden kann, welches wenigstens eine Gruppierung =N-O• aufweist.

9. Verfahren gemäss Anspruch 8, **dadurch gekennzeichnet, dass** eine Auswahl getroffen wird, als initiierend-steuernde Verbindung, aus einer Verbindung, die wenigstens ein aus denen der Formeln (IIIa), (IIIb) oder (IIIc) ausgewähltes Nitroxyl-Radikal bilden kann: 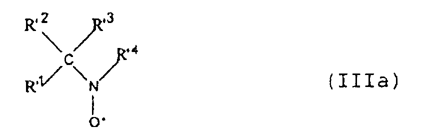 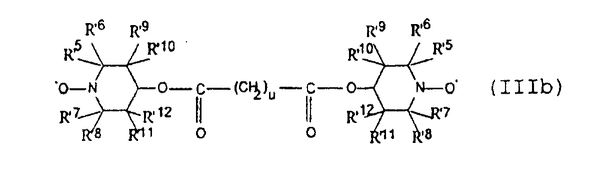 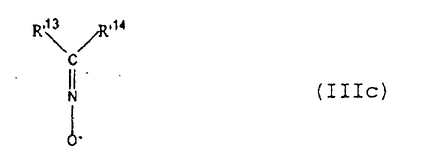 in denen:
- R'¹ bis R'³, R'⁵ bis R'⁸ und R'¹³ und R'¹⁴ jeweils unabhängig bedeuten:
(a) ein Wasserstoffatom;
(b) ein Halogenatom;
(c) eine gesättigte oder ungesättigte, lineare, verzweigte, mono- oder polyzyklische Kohlenwasserstoffgruppe, die mit wenigstens einem Halogen substituiert sein kann;
(d) eine Estergruppe -COOR'¹⁵ oder eine Alkoxylgruppe -OR'¹⁶, wobei R'¹⁵ und R'¹⁶ eine Kohlenwasserstoffgruppe bedeuten, wie sie oben unter Punkt (c) defmiert ist;
(e) eine Polymerkette;
- R'⁴ die oben unter den Punkten (a), (b), (c), (d) und (e) definierte Bedeutung besitzt;
- R'⁹ bis R'¹², die gleich oder verschieden sein können, die oben unter den Punkten (a) bis (e) definierten Bedeutungen besitzen und ferner eine Hydroxylgruppe oder eine Säuregruppe wie -COOH oder -SO₃H darstellen können;
- R'³ und R'⁴ miteinander verbunden sein können und - im Fall, wenn R'⁴ einen Rest -CR"¹R"²R"³ (R"¹ bis R"³ haben gleicherweise die Bedeutung der Reste R'¹ bis R'³), wobei R'3 mit R"³ zur Bildung eines Heterozyklus verbunden sein kann, der ein Stickstoffatom 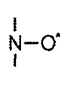 aufweist, und wobei der Heterozyklus gesättigt oder ungesättigt sein kann und im Zyklus wenigstens ein anderes Heteroatom und/oder wenigstens eine -C(O)- Gruppe und gleicherweise einen gesättigten oder ungesättigten Zyklus umfassen kann;
- zwei von R'¹ bis R'³ a R'⁵ und R'⁶ R'⁷ und R'⁸, R'⁹ und R'¹⁰, R'¹¹ und R'¹², R'⁶ und R'⁹, R'⁸ unf R'¹¹, R'¹³ und R'¹⁴ und - im Fall, dass R'⁴ einen Rest
- CR"¹R"²R"³ bedeutet, R'³ und R"³ - unabhängig voneinander miteinander verbunden sein können, um mit dem diese tragenden Kohlenstoffatom einen gesättigten oder ungesättigten Zyklus oder Heterozyklus zu bilden;
- u eine ganze, von Null verschiedene Zahl ist.

10. Verfahren gemäss Anspruch 9, **dadurch gekennzeichnet, dass** eine Auswahl getroffen wird, als initiierend-steuernde Verbindung, aus einer Verbindung, die wenigstens ein Nitroxyl-Radikal der Formel (IIIa) bilden kann, in denen R'³ und R'⁴ (oder R'³ und R"³) miteinander verbunden sind, aus: 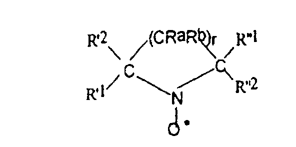 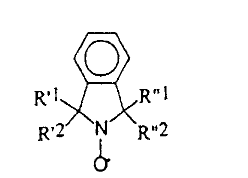 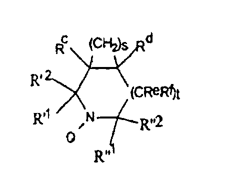 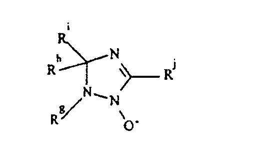 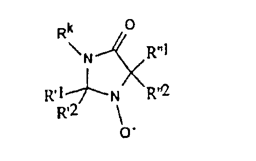 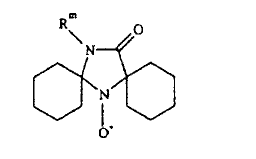 worin:
- R^{a} bis R^{k} und R^{m} unabhängig die R'⁹ bis R'¹² gegebenen Bedeutungen haben,
wobei R^{a} und R^{b} und R^{e} und R^{f} gleich oder verschieden sein können, wenn sie von unterschiedlichen Kohlenstoffatomen getragen werden;
- r den Wert 2 oder 3 oder 4 besitzt;
- s eine ganze, von Null verschiedene Zahl ist; und
- t den Wert 0, 1 oder 2 besitzt.

11. Verfahren gemäss einem der Ansprüche 9 oder 10, **dadurch gekennzeichnet, dass** eine Auswahl getroffen wird, als initiierend-steuernde Verbindung, aus einer wenigstens ein stabiles Nitroxyd-Radikal bildenden Verbindung aus:
• 2,2,5,5-Tetramethyl-1-pyrrolidinyloxy;
• 3-Carboxy-2,2,5,5-tetramethyl-1-pyrrolidinyloxy;
• 2,2,6,6-Tetramethyl-1-piperidinyloxy;
• 4-Hydroxy-2,2,6,6-tetramethyl-1-piperidinyloxy;
• 4-Methoxy-2,2,6,6-tetramethyl-1-piperidinyloxy;
• 4-Oxo-2,2,6,6-tetramethyl-1-piperidinyloxy;
• Bis-(1-oxyl-2,2,6,6-Tetramethylpiperidin-4-yl)sebacat;
• N-tert.-Butyl-1-phenyl-2-methylpropylnitroxyd; und
• N-tert.-Butyl-1-(2-naphthyl)-2-methylpropylnitroxyd

12. Verfahren gemäss einem der Ansprüche 1 bis 11, **dadurch gekennzeichnet, dass** ein Alkoxyamin als initierend-steuernde Verbindung verwendet wird.

13. Verfahren gemäss einem der Ansprüche 1 bis 11, **dadurch gekennzeichnet, dass** als initiierend-steuernde Verbindung ein Alkoxyamin verwendet wird, dessen Nitroxyd sich nicht zu mehr als 50 % während 2 Stunden bei 180 °C unter 200 MPa in Heptan zersetzt.

14. Verfahren gemäss einem der Ansprüche 1 bis 11, **dadurch gekennzeichnet, dass** als initiierend-steuernde Verbindung eine Verbindung ausgewählt wird aus:

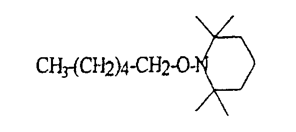

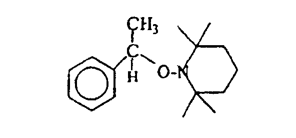

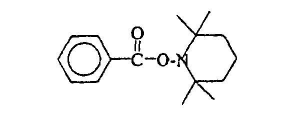

15. Verfahren gemäss einem der Ansprüche 1 bis 14, **dadurch gekennzeichnet, dass** das Verhältnis der initierend-steuemde(n) Verbindung(en)/Monomer(e) im Bereich von 0,0001 bis 10 Gew.-% liegt.

16. Verfahren gemäss Anspruch 15, **dadurch gekennzeichnet, dass** das Verhältnis der initierend-steuernde(n) Verbindung(en)/Monomer(e) im Bereich von 0,0005 bis 5 Gew.-% liegt.

17. Verfahren gemäss einem der Ansprüche 1 bis 16, **dadurch gekennzeichnet, dass** es unter einem Druck von 150 bis 300 MPa durchgeführt wird.

18. Verfahren gemäss Anspruch 17, **dadurch gekennzeichnet, dass** es unter einem Druck von 150 bis 250 MPa durchgeführt wird.

19. Verfahren gemäss einem der Ansprüche 1 bis 18, **dadurch gekennzeichnet, dass** es bei einer Temperatur von 100 bis 300 °C durchgeführt wird.

20. Verfahren gemäss Anspruch 19, **dadurch gekennzeichnet, dass** es bei einer Temperatur von 180 bis 250 °C durchgeführt wird.

21. Verfahren gemäss einem der Ansprüche 1 bis 20 zur Polymerisation von Ethylen, **dadurch gekennzeichnet, dass** es bei einer Temperatur, einem Druck und für eine Dauer durchgeführt wird, welche ausreichend sind, damit das erhaltene Polyethylen eine mittlere Molmasse von mehr als 80.000 besitzt und eine zahlengemittelte Molmasse von mehr als 20.000.

22. Verfahren gemäss einem der Ansprüche 1 bis 21, **dadurch gekennzeichnet, dass** es in der Gegenwart eines Lösungsmittels durchgerührt wird.

23. Verfahren gemäss Anspruch 22, **dadurch gekennzeichnet, dass** das Lösungsmittel ausgewählt ist aus Benzol, Toluol, Xylol, Ethylacetat, Methanol, Ethanol, Propanol, Isopropanol, Butanol, Isobutanol, Amylalkohol, Dimethylsulfoxid, Glykol, Dimethylformamid, Tetrahydrofuran und Mischungen aus denselben.

24. Verfahren gemäss einem der Ansprüche 22 und 23, **dadurch gekennzeichnet, dass** das Gewichtsverhältnis Lösungsmittel/Polymerisationszutaten grösser als 5 ist.

25. Verfahren gemäss einem der Ansprüche 1 bis 24, **dadurch gekennzeichnet, dass** es in der Gegenwart eines Transfer-Agenzes durchgeführt wird.

26. Verfahren gemäss einem der Ansprüche 1 bis 25, **dadurch gekennzeichnet, dass** es aus einer Copolymerisation von Ethylen mit wenigstens einem aus Vinyl-, Allyl-, Vinyliden-, Dien- und Olefinmonomeren ausgewählten Comonomer durchgeführt wird.

27. Verfahren gemäss einem der Ansprüche 1 bis 26, **dadurch gekennzeichnet, dass** es in einem Röhrenreaktor, einem Autoklaven oder einer Kombination von beiden durchgeführt wird.

28. Block-Copolymer, erhalten aus einer kontrollierten radikalischen Polymerisation oder Copolymerisation von Ethylen unter hohem Druck und in Gegenwart von wenigstens einer initiierend-steuernden Verbindung, welche unter den Polymerisations- oder Copolymerisationsbedingungen unter Zersetzung bildet:
- wenigstens ein freies initiierendes Radikal (Z), welches wenigstens eine eine (Co)polymerisation initiierenden Stelle aufweist und welche die Formel (II) besitzt:
Z¹-(PM)¹-[(PM)²]^{•} (II)
- in der:
- Z¹ das initiierende Fragment eines Radikalinitiators bedeutet;
- (PM)¹ ein durch lebende radikalische Polymerisation oder Copolymerisation von wenigstens einem radikalisch polymerisierbaren Monomer in Gegenwart eines Initiators, welcher freie Radikale Z^{1·} bildet, gebildetes Block-Polymer bedeutet;
- (PM)², dessen Gegenwart optional ist, ein weiteres, von (PM)¹ verschiedenes Block-Polymer bedeutet, welches durch lebende radikalische Polymerisation oder Copolymerisation von wenigstens einem radikalisch polymerisierbaren Monomer in Gegenwart eines Initiators Z¹-(PM)^{1•} gebildet ist; und
- wenigstens einem stabilen freien Radikal (SFR), welches wenigstens eine den stabilen Radikalzustand zeigende Stelle aufweist, welches unter den Polymerisationsbedingungen stabil ist.

29. Block-Copolymer nach Anspruch 28, **dadurch gekennzeichnet, dass** die Blöcke (PM)¹ und (PM)² die Formel: 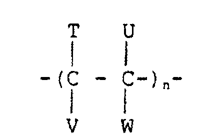 besitzen, worin:
- T und U jeweils unabhängig Wasserstoff oder einen substituierten oder nicht substituierten C₁₋₁₀-Alkylrest bedeuten;
- V und W jeweils unabhängig Wasserstoff bedeuten, substituiertes und nicht substituiertes Alkyl, substituiertes oder nicht substituiertes Aryl, -COOH, -COOR¹⁵, -CN, -CONH₂, -CONHR¹⁶, -CONR¹⁷R¹⁸, -OC(O)R¹⁹, -OR²⁰, worin R¹⁵ bis R²⁰ jeweils unabhängig substituiertes oder nicht substituiertes Alkyl oder substituiertes oder nicht substituiertes Aryl bedeuten; und
- n den Polymerisationsgrad bezeichnet, welcher bis insbesondere bis 10.000 reichen kann.

## Claims

1. Process for the radical polymerization or copolymerization of ethylene under high pressure in the presence of at least one polymerization initiating-controlling compound capable of providing, by decomposition under the polymerization or copolymerization conditions:
- at least one initiating free radical (Z) which carries at least one site for initiating the (co)polymerization; and
- at least one stable free radical (SFR) which carries at least one site exhibiting the stable radical state and which is stable under the polymerization conditions,
with, in total, as many initiating sites as sites exhibiting the stable radical state.

2. Process according to Claim 1, **characterized in that** the choice is made, as initiating-controlling compound, of a compound capable of providing at least one monofunctional radical Z chosen from those of the formulae (Ia) or (Ib) or (Ic): 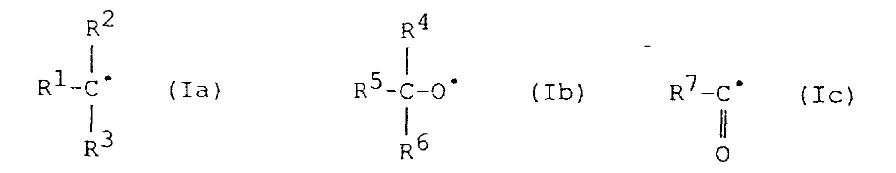 in which:
- R¹, R², R³, R⁴, R⁵, R⁶ and R⁷ each independently represent:
• optionally substituted C₁₋₂₄ alkyl;
• optionally substituted C₅₋₂₄ aryl;
it also being possible for R¹, R², R³, R⁴, R⁵ and R⁶ to each independently denote a hydrogen atom.

3. Process according to Claim 1, **characterized in that** the choice is made, as initiating-controlling compound, of a compound capable of providing at least one monofunctional radical Z chosen from those of the formulae (Ia₁) , (Ia₂) or (Ia₃) : 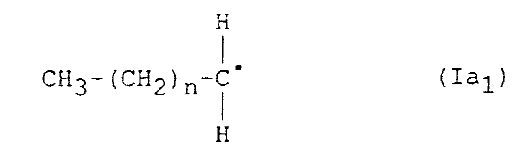 with n = 0 or an inteqer from 1 to 23; 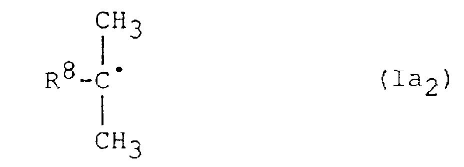 with R⁸ representing hydrogen, methyl or ethyl; and 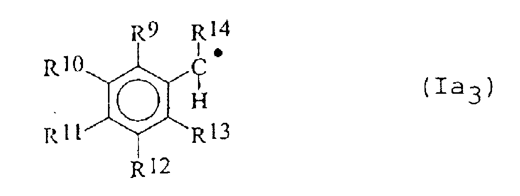 with:
- R⁹, R¹⁰, R¹¹, R¹² and R¹³ each independently representing alkyl, aryl or halogen; and
- R¹⁴ representing alkyl or aryl.

4. Process according to Claim 1,
**characterized in that** the choice is made, as initiating-controlling compound, of a compound capable of providing a radical Z of formula (II):
Z¹-(PM)¹-[(PM)²]^{•} (II)
in which:
- Z¹ represents the initiating fragment of a radical initiator;
- (PM)¹ represents a polymer block formed by living radical polymerization or copolymerization of at least one monomer which can polymerize by the radical route in the presence of an initiator which produces free radicals Z¹•; and
- (PM)², the presence of which is optional, represents another polymer block, other than (PM)¹, formed by living radical polymerization or copolymerization of at least one monomer which can polymerize by the radical route in the presence of the initiator Z¹-(PM)¹•.

5. Process according to Claim 4, **characterized in that** the (PM)¹ and (PM)² blocks have the formula: 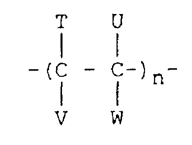 where:
- T and U each independently represent hydrogen or a substituted or unsubstituted C₁₋₁₀ alkyl residue;
- V and W each independently represent hydrogen, substituted or unsubstituted alkyl, substituted or unsubstituted aryl, -COOH, -COOR¹⁵, -CN, -CONH₂, -CONHR¹⁶, -CONR¹⁷R¹⁸, 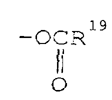 or -OR²⁰, R¹⁵ to R²⁰ each independently representing substituted or unsubstituted alkyl or substituted or unsubstituted aryl; and
- n denotes the degree of polymerization, which can in particular range up to 10 000.

6. Process according to Claim 1, **characterized in that** the choice is made, as initiating-controlling compound, of a compound capable of providing a polyfunctional radical Z carrying a plurality of initiating sites of 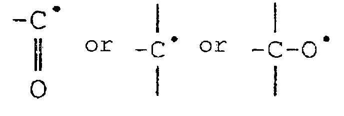 type.

7. Process according to Claim 6, **characterized in that** the choice is made, as initiating-controlling compound, of a compound capable of providing a polyfunctional radical Z of formula:

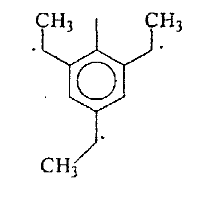

8. Process according to one of Claims 1 to 7, **characterized in that** the choice is made, as initiating-controlling compound, of a compound capable of providing at least one nitroxyl stable free radical comprising at least one =N-O• group.

9. Process according to Claim 8, **characterized in that** the choice is made, as initiating-controlling compound, of a compound capable of providing at least one nitroxyl radical chosen from those of the formulae (IIIa), (IIIb) or (IIIc): 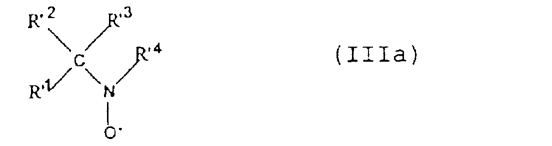 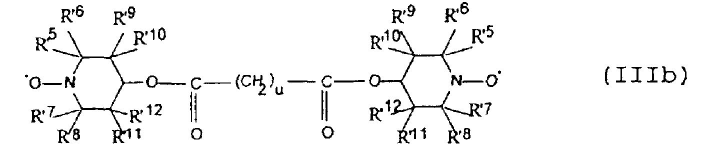 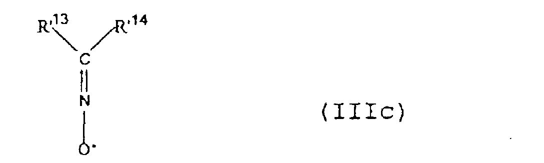 in which:
- R'¹ to R'³, R'⁵ to R'⁸ and R'¹³ and R'¹⁴ each independently represent:
(a) a hydrogen atom;
(b) a halogen atom;
(c) a saturated or unsaturated and linear, branched or mono- or polycyclic hydrocarbonaceous group which can be substituted by at least one halogen;
(d) an ester group -COOR'¹⁵ or an alkoxyl group -OR'¹⁶, R'¹⁵ and R'¹⁶ representing a hydrocarbonaceous group as defined in point (c) above;
(e) a polymer chain;
- R'⁴ has the meanings defined in points (a), (b), (c), (d) and (e) above;
- R'⁹ to R'¹², which are identical or different, have the meanings defined in points (a) to (e) above and can in addition represent a hydroxyl group or an acid group, such as -COOH or -SO₃H;
- it being possible for R'³ and R'⁴ to be connected to one another and, in the case where R'⁴ represents a -CR"¹R"²R"³ residue (R"¹ to R"³ having without distinction the meanings of R'¹ to R'³), it being possible for R'³ to be connected to R"³, to form a heterocvcle comprising the nitrogen atom of 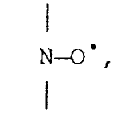 it being possible for the said heterocycle to be saturated or unsaturated, to comprise, in thE ring at least one other heteroatom and/or at least one 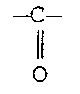 group and also to comprise a saturated or unsaturated fused ring;
- it being possible for two from R'¹ to R'³ R'⁵ and R'⁶, R'⁷ and R'⁸, R'⁹ and R'¹⁰, R'¹¹ and R'¹², R'⁶ and R'⁹, R'⁸ and R'¹¹, R'¹³ and R'¹⁴ and, in the case where R'⁴ represents a -CR"¹R"²R"³ residue, R'³ and R"³ independently to be connected to one another to form, with the carbon atom which carries them, a saturated or unsaturated ring or heterocycle;
- u is a non zero integer.

10. Process according to Claim 9, **characterized in that** the choice is made, as initiating-controlling compound, of a compound capable of providing at least one nitroxyl radical of formula (IIIa) in which R'³ and R'⁴ (or R'³ and R"³) are connected to one another chosen from: 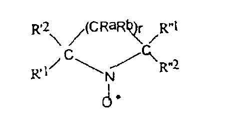 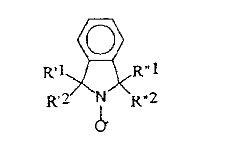 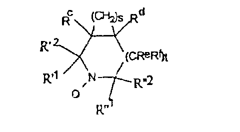 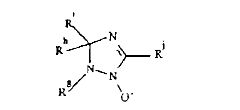 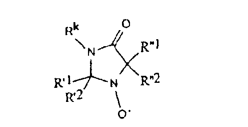 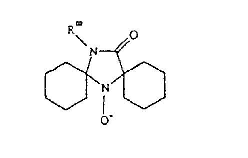 where:
- R^{a} to R^{k} and R^{m} have independently the meanings given for R'⁹ to R'¹², it being possible for R^{a} and R^{b} and R^{e} and R^{f} to be identical or different when they are carried by different carbon atoms;
- r has the value 2 or 3 or 4;
- s is a non zero integer; and
- t has the value 0, 1 or 2.

11. Process according to either of Claims 9 and 10, **characterized in that** the choice is made, as initiating-controlling compound, of a compound capable of providing at least one nitroxide stable radical chosen from:
• 2,2,5,5-tetramethyl-1-pyrrolidinyloxy;
• 3-carboxy-2,2,5,5-tetramethyl-1-pyrrolidinyloxy;
• 2,2,6,6-tetramethyl-1-piperidinyloxy;
• 4-hydroxy-2,2,6,6-tetramethyl-1-piperidinyloxy;
• 4-methoxy-2,2,6,6-tetramethyl-1-piperidinyloxy;
• 4-oxo-2,2,6,6-tetramethyl-1-piperidinyloxy;
• bis(1-oxyl-2,2,6,6-tetramethylpiperidin-4-yl) sebacate;
• N-tert-butyl-1-phenyl-2-methylpropyl nitroxide; and
• N-tert-butyl-1-(2-naphthyl)-2-methylpropyl nitroxide.

12. Process according to one of Claims 1 to 11, **characterized in that** an alkoxyamine is used as initiator-controller.

13. Process according to one of Claims 1 to 11, **characterized in that** use is made, as initiating-controlling compound, of an alkoxyamine, the nitroxide of which does not decompose to more than 50% over 2 hours at 180°C under 200 MPa heptane.

14. Process according to one of Claims 1 to 11, **characterized in that** use is made, as initiator-controller, of a compound chosen from:

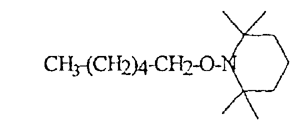

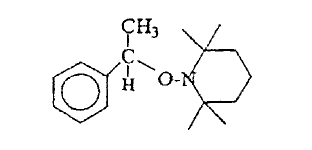

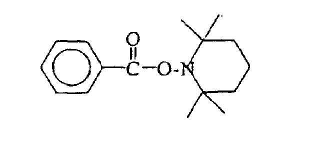

15. Process according to one of Claims 1 to 14, **characterized in that** the ratio of the initiating-controlling compound/monomer(s) is within the range from 0.0001% to 10% by weight.

16. Process according to Claim 15, **characterized in that** the ratio of the initiating-controlling compound/monomer(s) is within the range from 0.0005% to 5% by weight.

17. Process according to one of Claims 1 to 16, **characterized in that** it is carried out under a pressure of 150 to 300 MPa.

18. Process according to Claim 17, **characterized in that** it is carried out under a pressure of 150 to 250 MPa.

19. Process according to one of Claims 1 to 18, **characterized in that** it is carried out at a temperature of 100 to 300°C.

20. Process according to Claim 19, **characterized in that** it is carried out at a temperature of 180 to 250°C.

21. Process according to one of Claims 1 to 20 for the polymerization of ethylene, **characterized in that** it is carried out at a temperature, a pressure and a duration which are sufficient for the polyethylene obtained to have a weight-average molecular mass of greater than 80 000 and a number-average molecular mass of greater than 20 000.

22. Process according to one of Claims 1 to 21, **characterized in that** it is carried out in the presence of a solvent.

23. Process according to Claim 22, **characterized in that** the solvent is chosen from benzene, toluene, xylene, ethyl acetate, methanol, ethanol, propanol, isopropanol, butanol, isobutanol, amyl alcohol, dimethyl sulphoxide, glycol, dimethylformamide, tetrahydrofuran and their mixtures.

24. Process according to either of Claims 22 and 23, **characterized in that** the solvent/ polymerization ingredients ratio by weight is at most 5.

25. Process according to one of Claims 1 to 24, **characterized in that** it is carried out in the presence of a transfer agent.

26. Process according to one of Claims 1 to 25, **characterized in that** it comprises a copolymerization of ethylene with at least one comonomer chosen from vinyl, allyl, vinylidene, diene and olefinic monomers.

27. Process according to one of Claims 1 to 26, **characterized in that** it is carried out in a tubular reactor or autoclave or a combination of the two.

28. Block copolymers obtained by controlled radical polymerization or copolymerization of ethylene under high pressure in the presence of at least one polymerization initiating - controlling compound having provided, by decomposition under the polymerization or copolymerization conditions :
- at least one initiating free radical (Z) which carries at least one site for initiating the (co)polymerization and which has the formula (II) :
Z¹-(PM)¹-[(PM)²]^{•} (II)
in which:
- Z¹ represents the initiating fragment of a radical initiator;
- (PM)¹ represents a polymer block formed by living radical polymerization or copolymerization of at least one monomer which can polymerize by the radical route in the presence of an initiator which produces free radicals Z^{1•}; and
- (PM)², the presence of which is optional, represents another polymer block, other than (PM)¹, formed by living radical polymerization or copolymerization of at least one monomer which can polymerize by the radical route in the presence of the initiator Z¹-(PM)^{1•}; and
- at least one stable free radical (SFR) which carries at least one site exhibiting the stable radical state and which is stable under the polymerization conditions.

29. Block copolymers according to claim 28, **characterized in that** the (PM)¹ and (PM)² blocks have the formula: 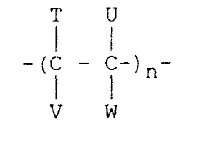 where:
- T and U each independently represent hydrogen or a substituted or unsubstituted C₁₋₁₀ alkyl residue;
- V and W each independently represent hydrogen, substituted or unsubstituted alkyl, substituted or unsubstituted aryl, -COOH, -COOR¹⁵, -CN, -CONH₂, -CONHR¹⁶, -CONR¹⁷R¹⁸, 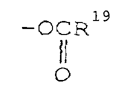 or -OR²⁰, R¹⁵ to R²⁰ each independently representing substituted or unsubstituted alkyl or substituted or unsubstituted aryl; and
- n denotes the degree of polymerization, which can in particular range up to 10 000.
